(19) Europäisches Patentamt
European Patent Office
Office européen des brevets

(11) Publication number: **0 099 199**
**B1**

(12) **EUROPEAN PATENT SPECIFICATION**

(45) Date of publication of patent specification: **15.10.86**

(51) Int. Cl.$^4$: **C 08 F 10/00,** C 08 F 4/62

(21) Application number: **83303655.1**

(22) Date of filing: **24.06.83**

(54) **Magnesium halide composition production and use.**

(30) Priority: **21.07.82 GB 8221039**

(43) Date of publication of application:
**25.01.84 Bulletin 84/04**

(45) Publication of the grant of the patent:
**15.10.86 Bulletin 86/42**

(84) Designated Contracting States:
**AT BE DE FR GB IT NL SE**

(56) References cited:
**EP-A-0 020 818**
**EP-A-0 037 182**

**CHEMICAL ABSTRACTS, vol. 89, no. 2, July 1978, page 19, no. 6834j, Columbus, Ohio, USA**

**The file contains technical information submitted after the application was filed and not included in this specification**

(73) Proprietor: **IMPERIAL CHEMICAL INDUSTRIES PLC**
**Imperial Chemical House Millbank**
**London SW1P 3JF (GB)**

(72) Inventor: **Kelland, John William**
**108 Lalleford Road**
**Stopsley Luton Bedfordshire (GB)**

(74) Representative: **James, David Gomer et al**
**Imperial Chemical Industries PLC Legal Department: Patents Po Box 6**
**Welwyn Garden City Herts, AL7 1HD (GB)**

**EP 0 099 199 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to the production of a magnesium halide composition, treatment of this composition with a transition metal compound, catalyst systems containing such treated compositions and the use of such catalyst system to polymerise unsaturated monomers, particularly olefin monomers such as ethylene and propylene.

In recent years, considerable effort has been directed to the production of polymerisation catalysts which are highly active whereby there is no need to remove catalyst residues from the polymer at the end of the polymerisation. For the polymerisation of propylene and the higher olefin monomers it is also necessary that the catalyst system should be stereospecific. Considerable effort has been directed to producing catalysts which combine high activity with good stereospecificity and catalysts have been developed which are capable of giving high yields of propylene polymers which are more than 90% insoluble in boiling heptane. Catalyst systems having such characteristics include those in which one component is obtained by contacting a magnesium halide with a transition metal compound.

The improvements in the catalyst system have made it possible to modify the polymerisation technique used. In particular, the polymerisation technique may be simplified to avoid the steps of post-treating the polymer product, which post-treatment has been necessary hitherto. To simplify the process even further, processes are now being used in which the polymerisation is carried out in the absence of any substantial quantity of inert hydrocarbon liquids in contrast to many prior art processes in which inert hydrocarbon liquids are as the suspension medium for the polymerisation process. In one technique, which avoids the use of any substantial quantity of inert hydrocarbon liquids, polymerisation is effected by using the monomer in the gaseous state and by contacting this gaseous monomer with growing polymer particles which contain active polymerisation catalyst. Using such a technique, the whole polymer product is recovered without separating any atactic polymer which may be formed. Hence, for use in such a process, it is necessary that the catalyst system should be particularly stereospecific. Whilst catalyst systems disclosed in the art, for example magnesium halide-supported materials such as are described in British patent specifications 1 540 323 and 1 559 194, have high activity and good stereospecificity, we have found that these systems, when used in a gas phase polymerisation process, give a propylene polymer product the properties of which are not as good as the desired properties. Surprisingly however, we have found that a magnesium halide material obtained by a modification of the processes of the prior art, may be used to produce a catalyst component from which a catalyst system having an improved stereospecificity can be obtained and such a catalyst system is then suitable for use in the gas phase polymerisation process to give propylene polymer products having useful properties.

According to the present invention there is provided a process for the production of a magnesium halide composition which process comprises contacting a magnesium halide with a) at least one compound of the formula

$$AO_aX_{(b-2a)}$$

and b) at least one compound of the formula $R^1OH$, or with the reaction product of a) and b) wherein

A is a non-metallic element, other than oxygen, of Group IV to VI of the Periodic Table;
$R^1$ is a hydrocarbon radical;
X is a halogen atom;
a has a value of 1 or 2 and 2a has a value which is less than the valency of A; and
b is equal to the valency of A.

For convenience hereafter the compound of the formula

$$AO_aX_{(b-2a)}$$

will be referred to as the "non-metallic halide". The non-metallic element A is preferably an element of the second or third series of the Periodic Table such as carbon, phosphorus or sulphur. The value of a in the non-metallic halide is preferably one. The halogen atom X is conveniently chlorine. We have obtained particularly useful results using thionyl chloride ($SOCl_2$) as the non-metallic halide.

The non-metallic halide is conveniently used in an amount of at least 1% up to 50% by weight relative to the magnesium halide and particularly in an amount of at least 2% up to 25% by weight relative to the magnesium halide.

The magnesium halide is preferably a magnesium chloride. It is also preferred that the magnesium halide is essentially a dihalide. It is especially preferred that the magnesium halide is essentially anhdrous, typically having a water content of not more than 2% by weight and especially having a water content of less than 1% by weight.

For convenience hereafter, the compound of the formula $R^1OH$ will be referred to as the "hydroxy compound". The group $R^1$ can be an alkyl group, for example an alkyl group containing up to 20 carbon atoms such as an ethyl, butyl, octyl or decyl group. Alternatively the group $R^1$ can be, or can contain, an aromatic group such as a phenyl, naphthyl, benzyl or methylphenyl group. We have obtained useful results

using a hydroxy compound in which the —OH group is directly linked to an aromatic ring, for example phenol.

The hydroxy compound is conveniently used in an amount of from 0.2% up to 50% by weight relative to the magnesium halide and particularly in an amount of from 1% up to 25% by weight relative to the magnesium halide. The number of moles of the hydroxy compound is less than the number of moles of the non-metallic halide.

The non-metallic halide and the hydroxy compound may be contacted with the magnesium halide by adding the two materials in turn, in either order, to the magnesium halide. Alternatively, the two materials may be added essentially simultaneously, that is within not more than 5 minutes of each other, to the magnesium halide.

According to a further aspect of the present invention, the non-metallic halide and the hydroxy compound are reacted together, and the reaction product obtained, preferably in the presence of the non-metallic halide, is contacted with the magnesium halide.

The product of reacting together the non-metallic halide and the hydroxy compound is typically a compound of the general formula

$$R^1OAO_aX_{(b-2a-1)}$$

where A, $R^1$, X, a and b are all as hereinbefore defined and 1 is the number one. When the non-metallic halide is thionyl chloride, the reaction product is typically a sulphonic acid chloride of the formula $R^1SO_2Cl$, such as benzene sulphonic acid chloride ($C_6H_5SO_2Cl$). A sulphonic acid chloride can be prepared by reacting the hydroxy compound with a molar excess of thionyl chloride to obtain a solution of the sulphonic acid chloride in thionyl chloride.

According to yet a further aspect of the present invention, a magnesium halide is contacted with a solution of a sulphonic acid chloride in thionyl chloride. Catalyst systems having useful characteristics can be formed from the magnesium halide composition obtained.

The magnesium halide is also very preferably contacted with a Lewis Base compound which is other than a compound of formula $R^1OH$ or the reaction product thereof with the non-metallic halide. For convenience hereafter, the term "non-hydroxy Lewis Base compound" will be used to mean a Lewis Base compound which is other than a compound of the formula $R^1OH$ or the reaction product thereof with the non-metallic halide. A wide range of such Lewis Base compounds may be used but we prefer that the non-hydroxy Lewis Base compound is an ester or an organic silicon compound. Esters which may be used include mono- and poly-esters of saturated and unsaturated polycarboxylic acids (which term is used herein to include dicarboxylic acids) and also esters of the formula

$$R^2COOR^3$$

wherein

$R^2$ is a hydrocarbon radical which may be substituted with one or more halogen atoms and/or oxyhydrocarbon groups; and

$R^3$ is a hydrocarbon radical which may be substituted by one or more halogen atoms.

Organic silicon compounds which may be used include compounds containing one or more Si—$OR^4$, Si—$OCOR^4$ or Si—$NR^4$ bonds,

wherein

$R^4$ is a hydrocarbyl group which may be substituted with one or more halogen atoms and/or oxyhydrocarbon groups.

Thus, as a further aspect of the present invention a magnesium halide is contacted with

a) at least one compound of the formula $AO_aX_{(b-2a)}$;

b) at least one compound of the formula $R^1OH$; or the product of reacting (a) and (b), optionally together with a further quantity of (a); and

c) at least one Lewis Base compound selected from mono- and poly-esters of saturated and unsaturated polycarboxylic acids; esters of the formula; $R^2COOR^3$; and organic silicon compounds which contain one or more Si—$OR^4$, Si—$OCOR^4$ or Si—$NR^4$ bonds wherein A, $R^1$, $R^2$, $R^3$, $R^4$, X, a, and b are all as hereinbefore defined.

Esters of polycarboxylic acids which may be contacted with the magnesium halide include diethyl phthalate, di-isobutyl maleate and diethyl-2,3-naphthalenedicarboxylate. Esters of the defined formula include those in which the groups $R^2$ and $R^3$ may be the same or different and preferably those in which one, but not both, of the groups $R^2$ and $R^3$ includes an aryl group. The group $R^2$ is conveniently an optionally substituted alkyl or aryl group, for example, a methyl, an ethyl or especially a phenyl, a methylphenyl, a methoxyphenyl a fluorophenyl or a benzyl group. The group $R^3$ is preferably an alkyl group containing up to 6 carbon atoms, for example a methyl, an ethyl or a butyl group. It is particularly preferred that $R^2$ is or contains, an aryl group and that $R^3$ is an alkyl group. Organic silicon compounds which may be contacted with the magnesium halide include phenyltriethoxysilane, diphenyldi-isobutoxysilane and iso-butyltriethoxysilane.

The non-hydroxy Lewis Base compound is conveniently used in an amount of up to 5 moles for each

mole of the magnesium halide, for example up to 2, and especially from 0.02 up to 1, moles of the non-hydroxy Lewis Base compound for each mole of magnesium halide.

The magnesium halide may be contacted with the non-metallic halide, the hydroxy compound and, if desired with the optional non-hydroxy Lewis Base compound, using any suitable contacting technique. A convenient technique for effecting the contacting is by grinding together the magnesium halide and the desired proportions of the non-metallic halide, the hydroxy compound, and the optional non-hydroxy Lewis Base compound.

The grinding may be carried out in any suitable grinding apparatus such as, for example, a rotating ball mill or a vibrating ball mill. The grinding is very preferably carried out in the substantial absence of oxygen or moisture.

The grinding conditions will be dependent on the grinding technique and on the nature of the materials being ground. However, in general it is preferred to carry out the grinding for a period of from 1 hour up to 5 days particularly from 5 up to 40 hours. Any suitable temperature may be used for the grinding, for example, from −50°C up to 100°C, especially from −10°C up to 80°C, and, if desired, the temperature may be varied during the grinding operation. The grinding may be carried out without applying heating or cooling to the pulverising apparatus. However, the conditions of grinding are generally such that heat is generated during the grinding and hence, in order to operate at an essentially constant temperature for example ambient temperature, which is the generally desired procedure, it may be necessary to apply cooling to the grinding apparatus. The need for cooling will be dependent on the mill size and the milling conditions.

The intensity of grinding will be dependent upon the type of grinding apparatus which is being used. Using a rotating ball mill, it is preferred that the mill is rotated at between 50% and 90% of the critical speed. By critical speed is meant the speed at which particles and balls are held by centrifugal force against the walls of the mill and do not tumble. Using a vibration mill, the mill is preferably operated to give an acceleration of between 12 and 200 metres per $sec^2$. Since the vibration mill gives a more intensive grinding using such a mill a shorter time of grinding is possible than when a rotating ball mill is used.

If the magnesium halide is contacted with a non-hydroxy Lewis Base compound during the grinding, the non-hydroxy Lewis Base compound may be added to the magnesium halide either before or after adding the non-metallic halide and the hydroxy compound, or at the same time as the non-metallic halide, and the hydroxy compound are added. If the non-metallic halide, the hydroxy compound and/or the reaction product of these two materials, are added first, and contacting is effected by grinding, it is preferred to effect the grinding for from 30 minutes up to 30 hours, particularly one up to six hours, before the non-hydroxy Lewis Base compound is added, and to continue grinding in the presence of the added non-hydroxy Lewis Base compound, preferably for at least 5 hours up to 30 hours.

Although contacting is conveniently effected using a grinding process, this is not an essential feature of the present invention and a part, or all, of the contacting may be effected without grinding, for example by suspending the magnesium halide in a liquid medium which contains at least one of the non-metallic halide, the hydroxy compound or the non-hydroxy Lewis Base compound. The liquid medium is preferably a solution of the non-metallic halide, the hydroxy compound or the non-hydroxy Lewis Base compound in an inert liquid, particularly a hydrocarbon or a halohydrocarbon.

The magnesium halide composition obtained in the manner hereinbefore described may be used to produce a transition metal composition by contacting with a compound of a transition metal of Groups IVA to VI of the Periodic Table. The transition metal composition thus obtained can be used as a component of an olefin polymerisation catalyst. Particularly useful transition metal compositions are obtained when the compound of a transition metal is titanium tetrachloride.

According to a further aspect of the present invention, a magnesium halide composition obtained as hereinbefore described is contacted with titanium tetrachloride or a titanium tetrachloride-containing material. For convenience "titanium tetrachloride" will be used hereafter to include the titanium tetrachloride-containing material.

The contacting with titanium tetrachloride may be effected in more than one stage, for example in two stages, but satisfactory results can be obtained by effecting the contacting in only one stage.

After contacting with titanium tetrachloride, the product obtained, which is a solid transition metal composition, is preferably separated from any excess quantity of any liquid phase which is present and the product may be washed to remove some soluble titanium-containing species, including absorbed titanium tetrachloride, from the separated solid. However, in contrast to previous processes, we have found that it is not necessary to effect the washing of the solid product to remove all of the soluble titanium-containing species from the solid product. More specially, we have obtained satisfactory products wherein at least 25% by weight, and in some cases in excess of 50% by weight, of the titanium-containing species which are present in the solid transition metal composition are capable of being removed by continued washing with a hot hydrocarbon or a hot halohydrocarbon liquid such as for example heptane, chlorobenzene or 1,2-dichloroethane.

The contacting with titanium tetrachloride may be effected using a liquid phase containing titanium tetrachloride, wherein the liquid phase generally contains more than 25% by weight of titanium tetrachloride, and it is preferred that the liquid phase contains at least 45% by weight of titanium tetrachloride. It is especially preferred that the liquid phase consists solely of liquid titanium tetrachloride. If

a solution of titanium tetrachloride is used, the solvent is preferably an inert material, particularly an inert hydrocarbon or halohydrocarbon, especially an aliphatic hydrocarbon.

The contacting of the magnesium halide composition with titanium tetrachloride may be effected by suspending the magnesium halide composition in an excess quantity of a titanium tetrachloride-containing liquid and agitating the mixture, for example by stirring. In effecting contacting in this manner, the volume of the liquid is typically not less than the volume of the magnesium halide composition and typically there is used 1 to 10 especially 2 to 8 volumes of the liquid for each volume of the magnesium halide composition. Preferably, the contacting of the magnesium halide composition with a titanium tetrachloride-containing liquid is effected, at least partially, at an elevated temperature which is conveniently at least 60°C up to the boiling temperature of the liquid phase, which is 137°C when the liquid phase is undiluted titanium tetrachloride. Preferably, the contacting is effected at a temperature in the range 80°C up to 120°C. The magnesium halide composition may be contacted with the titanium tetrachloride-containing liquid when the liquid is at the desired elevated temperature or the magnesium halide composition may be added to the liquid at a lower temperature, which is conveniently ambient temperature, and the mixture is then heated to the desired elevated temperature.

As an alternative to suspending the magnesium halide composition in a titanium tetrachloride-containing liquid, the contacting of the magnesium halide composition with titanium tetrachloride may be effected by grinding. If the magnesium halide composition is obtained by a grinding process, the contacting with a titanium tetrachloride-containing material can be effected in the same grinding apparatus by adding a titanium tetrachloride-containing material, preferably undiluted titanium tetrachloride, and continuing to grind for a suitable period of time. Using a grinding process, the volume of the titanium tetrachloride-containing material is preferably less than the volume of the magnesium halide composition. Preferably, not more than one mole of titanium tetrachloride is present during the grinding for each mole of the magnesium halide, and the amount of titanium tetrachloride is typically from 0.01 up to 0.5, and especially from 0.02 up to 0.1, moles for each mole of the magnesium halide. If a non-hydroxy Lewis Base compound has been used in obtaining the magnesium halide composition, the proportion of titanium tetrachloride used in the grinding is conveniently from 0.5 up to 2 moles, and especially one mole, for each mole of the non-hydroxy Lewis Base compound. If desired, particularly if the magnesium halide composition does not include a non-hydroxy Lewis Base compound, the titanium tetrachloride may be used as a complex with a non-hydroxy Lewis Base compound. The grinding of the magnesium halide composition and the titanium tetrachloride-containing material may be effected at a temperature in the range which is suitable for grinding the magnesium halide with the non-metallic halide, the hydroxy compound and the optional non-hydroxy Lewis Base compound, and is conveniently effected without applying heating or cooling to the grinding apparatus.

If contacting with titanium tetrachloride is effected in more than one stage, such a procedure may be effected by grinding the magnesium halide composition with titanium tetrachloride and thereafter suspending the product in a titanium tetrachloride-containing liquid.

If the magnesium halide composition is suspended in a titanium tetrachloride-containing liquid to effect contacting, the contacting is conveniently effected for a period of time of from 0.25 hours up to 10 hours, for example 0.5 up to 5 hours. If contacting is effected by grinding, a longer period of time may be used such as up to 100 hours, for example from 2 up to 80 hours, conveniently 5 up to 30 hours.

After the desired time of contacting with titanium tetrachloride, the solid transition metal composition obtained is preferably separated from any excess liquid phase which is present. The separation is effected by any suitable technique, for example by allowing the solid to settle and removing the supernatant liquid phase from the settled solid by a technique such as decantation, or using a siphon, or by using a technique such as filtration which gives essentially complete separation. Although filtration gives more complete separation than is readily achieved by settling and removing the supernatant liquid, we have found that, when operating in accordance with the present invention, the solid may include fine particulate material, the presence of which can cause blockage of the filter and this is undesirable on a commercial scale and outweighs any advantage of complete separation.

The contacting with titanium tetrachloride may be repeated, preferably not more than once. Each repeat contacting may be effected by suspending the magnesium halide composition in titanium tetrachloride under the conditions hereinbefore described. If more than one contacting step is effected, it is convenient, but not essential, for each step to be effected under essentially the same conditions of temperature and time.

After contacting the magnesium halide composition with titanium tetrachloride, the solid transition metal composition is preferably separated from any excess liquid phase which is present and thereafter washed at least once with an inert hydrocarbon or halohydrocarbon. Suitable inert liquids include hexane, heptane, octane, decane, dodecane and mixtures of the isomers thereof, aromatic liquids such as benzene and toluene, and halohydrocarbons such as 1,2-dichloroethane and chlorobenzene. The washing is conveniently effected by suspending the transition metal composition in the inert liquid hydrocarbon or halohydrocarbon medium and agitating the mixture for a period of time of at least 0.25 hours up to 10 hours conveniently 0.5 up to 5 hours. The number of washing steps used will depend on the quantity of the inert liquid hydrocarbon or halohydrocarbon used in each washing step and the time and temperature of each washing step. The washing step may be effected at ambient temperature but it is preferred that at

least one washing step is effected under conditions such that the inert liquid hydrocarbon or halohydrocarbon attains an elevated temperature which is in the range 60°C up to 120°C, and especially at least 80°C.

The at least one washing step is believed to remove some complexes of titanium tetrachloride and the optional non-hydroxy Lewis Base compound from the transition metal composition and also to remove any excess unreacted titanium tetrachloride which remains. For the removal of the complexes, it is desirable that the at least one washing step, and particularly at least the first washing step when several washing steps are used, is effected at an elevated temperature of at least 60°C, particularly at least 80°C. However, if more than one washing step is used, the washing steps after the first step may be effected at a lower temperature. If the liquid medium is separated from the transition metal composition by a decantation process, or by using a siphon, unseparated liquid, which typically includes unreacted titanium tetrachloride, remains with the transition metal composition and the proportion of this unreacted titanium tetrachloride can be reduced by washing at ambient temperature.

If the magnesium halide composition has been suspended in a titanium tetrachloride-containing liquid at an elevated temperature, it is preferred to effect the washing step, or the first washing step, before any substantial cooling has occurred after separating the transition metal composition from the titanium tetrachloride-containing liquid. Thus, it is preferred to add the inert hydrocarbon or halohydrocarbon liquid to the separated solid transition metal composition within a few minutes, for example within one to 30 minutes, of removing the titanium tetrachloride-containing liquid. However, it will be appreciated that if the magnesium halide composition is ground with titanium tetrachloride, since such a process preferably does not use an excess amount of a liquid material, the foregoing procedure may not be required. The at least one washing step is conveniently effected in a vessel containing heating means, such as an outer jacket for a heating fluid, and it is preferred to continue heating during the washing step or during at least the first of the washing steps. The washing may be effected without allowing any appreciable cooling of the separated solid transition metal composition to occur and adding the inert hydrocarbon or halohydrocarbon liquid at ambient temperature whilst still supplying heat to the solid, and the added liquid. The washing step, or each washing step, is effected by suspending the solid transition metal composition in the inert hydrocarbon or halohydrocarbon liquid and agitating the mixture for a period of time which may be from 5 minutes up to 10 hours, and which is preferably from 15 minutes up to 4 hours. If the solid has been obtained by grinding the magnesium halide composition with titanium tetrachloride, or has been separated from a titanium tetrachloride-containing liquid and allowed to cool appreciably, for example to ambient temperature, it is desirable that the at least one washing step, or at least the first washing step, is effected at an elevated temperature of at least 80°C, for example using heptane at reflux temperature, and that the elevated temperature is maintained for at least two hours, in order to ensure that materials which are insoluble at the initial low temperature may be dissolved in the hot inert hydrocarbon or halohydrocarbon liquid.

The quantity of the inert hydrocarbon or halohydrocarbon liquid used for the at least one washing step is conveniently in the range from 5 $cm^3$ to 20 $cm^3$ for each gramme of the transition metal composition, particularly from 8 $cm^3$ to 12 $cm^3$ for each gramme of the transition metal composition.

If the magnesium halide composition is suspended in undiluted titanium tetrachloride, if the washing step, or at least the first washing step, is effected before the separated transition metal composition has cooled appreciably, for example before the separated transition metal composition has cooled below 70°C, and if heating is continued throughout the washing, we have found that satisfactory products can be obtained using not more than two washing steps at an elevated temperature of at least 60°C. Using such a procedure, adequate washing may be achieved by agitating the mixture of the separated transition metal composition and the inert hydrocarbon or halohydrocarbon liquid at the elevated temperature and continuing the agitation for from 5 minutes up to two hours, typically for 10 minutes up to 45 minutes before either separating the solid from the liquid or allowing the solid to settle. After washing at the elevated temperature, if the liquid is separated by decantation or by using a siphon, further washes may be effected at a lower temperature, typically at ambient temperature, to reduce the proportion of unreacted titanium tetrachloride which remains with the solid transition metal composition.

If the transition metal composition is at ambient temperature, for example as a result of being allowed to cool to ambient temperature, before effecting the, or the first, washing step, it is preferred to effect the washing step, or the first washing step, at the elevated temperature using a higher temperature and/or for a longer period of time in order to ensure that materials which are insoluble at the initial low temperature, such as complexes of titanium tetrachloride and the optional non-hydroxy Lewis Base compound are dissolved and extracted by the washing step.

After the, or each, washing step, the transition metal composition may be separated from the liquid phase by filtration, decantation or by means of a siphon. The latter two techniques do not remove all of the liquid from the solid and hence more washing steps may be required to remove unreacted titanium tetrachloride from the solid. However, the transition metal composition may contain a significant proportion (for example at least 10% by weight) of particles having a particle size of less than 5 microns, and the presence of such small particles may adversely effect the efficiency of a filtration process. Using a siphon to effect separation of the transition metal composition from the liquid, we have obtained a satisfactory product by effecting a first washing step at a temperature of about 100°C, a second washing

step with the temperature rising to be in the range 35 to 60°C and one further washing step at essentially ambient temperature.

According to a preferred aspect of the present invention, it is not necessary to remove all of the removable titanium materials by the optional washing steps. Indeed, we have obtained solid, titanium-containing materials which contain a substantial proportion of titanium species which can be removed by continued hot washing with an inert hydrocarbon or halohydrocarbon liquid, and we have found that such solid materials, when used as a catalyst component to polymerise propylene, give a high yield of a polymer having good stereoregularity (more than 90% is insoluble in boiling heptane). We have found that continued hot washing can reduce the titanium content of the final product to below one percent by weight but we prefer that the titanium content of the final product is in the range from 1.5 up to 3% by weight and particularly that the titanium content is not below 2% by weight. In the preferred transition metal compositions obtained by the process of the present invention, a substantial proportion of the titanium, for example at least 25% and possibly in excess of 50%, is capable of being removed by continued hot washing with an inert hydrocarbon or halohydrocarbon liquid. However, in general, the presence of such quantities of extractable titanium species does not detract from the characteristics of the transition metal composition when used as a component of an olefin polymerisation catalyst which has high activity and high stereospecificity.

Whilst the production of the transition metal composition has been described in detail with reference to the use of titanium tetrachloride, it should be appreciated that other compounds of a transition metal can be used in a generally similar manner although with a solid compound of a transition metal it is generally more convenient to effect contacting with the magnesium halide composition by grinding the two materials together.

The magnesium halide composition or the transition metal composition is typically obtained by a process which includes a grinding step. The product obtained by grinding typically contains a significant proportion, typically at least 10% by weight, of particles of a fine particle size of less than 5 microns. Furthermore, the ground product, in addition to having a poor particle size distribution, also has a particle form which is not ideal for a catalyst component. Since the particle form of the particles of the solid catalyst component may be replicated by the polymer product, for example when polymerising propylene, the particle form, and in particular the powder flow, of the polymer product will not be ideal. Furthermore, if the polymerisation is effected by a gas phase process, particularly a fluidised bed process, the fine particle size materials will be readily entrained in the circulating gas stream and removed from the polymerisation reactor. This could result in the presence of a highly active catalyst in the circulating gas stream which causes continuing polymerisation with the consequential deposition of polymer in, and possibly blocking of, the circulating gas loop. To minimise these problems, it is desirable to improve the particle form of the solid magnesium halide composition or transition metal composition which are the products of different aspects of the process of the present invention.

The particle form of the final product may be improved by suspending a solid material in an inert liquid medium, spray-drying the suspension formed and collecting a spray-dried solid material wherein the solid material is the original magnesium halide or a solid obtained in a subsequent stage of the process, including the magnesium halide composition or the transition metal composition. The solid material which is spray-dried may be the magnesium halide composition which has been contacted with the non-metallic halide and the hydroxy compound and/or the optional non-hydroxy Lewis Base compound, or may be the solid transition metal composition. If the magnesium halide composition is spray-dried, the spray-dried product thereby obtained may be contacted thereafter, without grinding, with a liquid phase containing a compound of a transition metal such as titanium tetrachloride in accordance with the present invention. Alternatively, a spray-dried magnesium halide is contacted first with the non-metallic halide and the hydroxy compound, and the optional non-hydroxy Lewis Base compound and thereafter with a liquid phase containing a compound of a transition metal, all of these contacting steps being effecting without grinding.

Thus, as a further aspect of the present invention, a spray-drying step may be incorporated either before the first stage, between two successive stages or after the final stage of the process hereinbefore described.

The spray-drying step can be effected using conventional spray-drying techniques. To effect spray-drying, the suspension is passed through a suitable atomizer which creates a spray or dispersion of droplets of the suspension, a stream of a hot gas is arranged to contact the droplets and cause evaporation of the liquid medium and the solid product which separates is collected. Suitable atomizers for producing the droplets of the suspension include nozzle atomizers and spinning disc atomizers. The inert liquid medium used for the spray-drying may be any liquid medium which does not have a deleterious effect on the characteristics of an olefin polymerisation catalyst system which incorporates the spray dried material. Typically the inert liquid medium is a liquid hydrocarbon such as an aliphatic, aromatic or cycloaliphatic hydrocarbon or a halohydrocarbon such as chlorobenzene, but other materials such as titanium tetrachloride or polar materials such as esters may be used even though such materials are not normally regarded as inert when used in an olefin polymerisation process.

The product obtained by including a spray-drying stage in the process of the present invention typically contains a reduced proportion of fine particulate material and has a particle form which is

generally spherical. The product obtained by using a spray-drying stage is suitable for effecting polymerisation in the gas phase.

Spray-drying of suspensions which include a transition metal composition, particularly where at least a part of the solid component of the suspension is, or contains, a transition metal compound, is the subject of our European Patent Application Publication No. 0 037 182. After contacting the magnesium halide composition with a compound of a transition metal such as titanium tetrachloride, the product contains a transition metal and may be spray-dried in accordance with European Patent Application Publication No. 0 037 182. However, the spray-drying step may be effected using the original magnesium halide or an intermediate product, including the magnesium halide composition, which has not been contacted with a compound of a transition metal and thereafter effecting the subsequent stages, including the contacting with a compound of a transition metal, using the spray-dried support material. Spray-drying of catalyst supports such as silica, alumina and magnesium halide materials and subsequently contacting the spray-dried support material with a compound of a transition metal is the subject of our European Patent Application Publication No. 72129.

The various solid materials obtained at different stages of the present invention typically include not only fine particles but also some coarser particles having a particle size which exceeds 50 microns. The presence of such coarser particles may cause blocking of a spray-drying apparatus or may result in the spray-dried material containing such coarser particles which have been essentially unaffected by the spray-drying and have an undesirable particle size and/or shape.

As a preliminary stage before spray-drying, a suspension of the solid in a liquid medium may be subjected simultaneously to vigorous agitation and shearing, for example using a device which is suitable for the production of a liquid-liquid emulsion, as is described in more detail in our European Patent Application Publication No. 72128. Suitable devices for this purpose are stirrers of the Ultra Turrax type (available from Janke and Kunkel KG IKA Werke) and high shear mixers such as are available from Silverson Machines Limited of Chesham, Buckinghamshire, England. The procedure of vigorous agitation and shearing may be applied to the solid material at any stage of the present invention and the thus-treated solid is then spray-dried and the spray-dried solid subjected to any remaining stages of the process of the present invention.

As an alternative preliminary stage before spray-drying, the solid may be mixed with a liquid medium and the mixture subjected to a grinding process and the ground mixture spray-dried as is also described in more detail in our aforesaid European Patent Application Publication No. 72128. This grinding procedure may be applied to the solid material at any stage of the present invention but it is convenient to effect the grinding in the presence of the liquid medium using a magnesium halide composition, spray-drying the mixture and subjecting the spray-dried solid to any remaining stages in the process of the present invention.

If a spray-drying step is included, the spray-dried solid is an agglomerate of smaller particles. In general, in using the spray-dried solid it will be subjected to shearing forces due to agitation or being circulated through pipe-work, and these shearing forces may cause at least some break-down of the spray-dried solid to smaller particles. To minimise such break-down it is preferred to incorporate into the spray-dried solid a material which renders the spray-dried solid more resistant to attrition and which may also assist in the agglomeration of the solid particles during the spray-drying step. For convenience hereafter, such a material will be referred to as an "attrition inhibitor".

The attrition inhibitor is conveniently present during the spray-drying stage and is typically present as a solution in the inert liquid medium in which the solid is suspended. The attrition inhibitor should be such that, or should be used in an amount such that, it does not have an appreciable adverse effect on the activity and stereospecificity of an olefin polymerisation catalyst system which includes a solid material obtained by including a spray-drying step in the process of the present invention. If the material obtained by the use of a spray-drying step is subsequently to be suspended in a liquid medium, the attrition inhibitor preferably should be such as to at least minimise dispersion of the spray-dried solid material into smaller particles in the presence of the liquid medium in which the solid is to be suspended. Hence, the attrition inhibitor is preferably soluble in the liquid medium used for the spray-drying step but is insoluble, or of low solubility, in any liquid medium in which the solid is suspended after effecting the spray-drying step.

The attrition inhibitor may be, for example, polystyrene, polymethylmethacrylate, polyvinylacetate, atactic polypropylene, or an AB block copolymer for example of t-butylstyrene-styrene. It will be appreciated that not all attrition inhibitors will be equally effective. The use of an attrition inhibitor during the spray-drying of the suspension can result in the spray-dried solid material being in the form of firmer agglomerates than a similar spray-dried solid material obtained without using an attrition inhibitor. The amount of the attrition inhibitor is preferably from 0.5% up to 10% by weight relative to the solid material present in the suspension. The suspension containing the attrition inhibitor is spray-dried using conventional spray-drying techniques, for example such as are described in our European Patent Application Publication No. 0 037 182.

If a spray-dried magnesium halide is subsequently contacted with the non-metallic halide and the hydroxy compound, typically this is effected using the non-metallic halide and the hydroxy compound in the proportions as hereinbefore described. This contacting is effected without grinding, conveniently using the non-metallic halide and the hydroxy compound as a solution in a suitable inert solvent, such as a

hydrocarbon solvent. The contacting is effected at a temperature which is conveniently in the range from ambient temperature up to 100°C, especially up to 60°C. The solution of the non-metallic halide and the hydroxy compound is preferably separated, at least partially, from the spray-dried magnesium halide and the solid is then suspended in a liquid phase containing a compound of a transition metal in the manner hereinbefore described. If desired, the contacting of the spray-dried magnesium halide with the non-metallic halide and the hydroxy compound is additional to a stage of contacting with the non-metallic halide and the hydroxy compound which has been effected as a previous stage of the process of the present invention. If the magnesium halide is contacted with the non-metallic halide and/or the hydroxy compound in more than one stage, the amount of the non-metallic halide and/or the hydroxy compound used in each stage is conveniently not more than 50% by weight relative to the magnesium halide and particularly the amount of the non-metallic halide and/or the hydroxy compound used in all stages does not exceed 50% by weight relative to the magnesium halide.

We have found that the transition metal composition obtained by the process of the present invention, with or without the spray-drying step, may be used in combination with organic metal compounds, and preferably Lewis Base compounds, to give a polymerisation catalyst and that this catalyst has a high activity and stereospecificity when used for the polymerisation of alpha-olefin monomers.

According to a further aspect of the present invention there is provided a polymerisation catalyst which comprises

A. A transition metal composition produced by a process as hereinbefore described; and

B. An organic compound of aluminium or of a non-transition metal of Group IIA of the Periodic Table, or a complex of an organic compound of a non-transition metal of Group IA or IIA of the Periodic Table together with an organic aluminium compound.

Component A of the catalyst system is preferably a titanium composition which has been obtained by contacting the magnesium halide composition with titanium tetrachloride.

Component B of the catalyst system may be an organic magnesium compound or a mixture or complex thereof with an organic aluminium compound. Alternatively, a complex of a metal of Group IA with an organic aluminium compound may be used, for example, a compound of the type lithium aluminium tetraalkyl. However, it is preferred to use an organic aluminium compound and in particular it is preferred to use a tri-hydrocarbon aluminium compound such as an aluminium trialkyl compound, particularly one in which the alkyl group contains from 1 up to 10 carbon atoms, for example, aluminium triethyl, aluminium tri-isobutyl or aluminium trioctyl.

In addition to Components A and B, it is preferred that the catalyst system includes a Lewis Base compound.

The Lewis Base compound which is used in the additional stage can be any organic Lewis Base compound which has been proposed for use in a Ziegler polymerisation catalyst and which affects either the activity or stereospecificity of such a catalyst system. Thus, the Lewis Base compound may be an ether, an ester, a ketone, an alcohol, an ortho-ester, a sulphide (a thioether), an ester of a thiocarboxylic acid (a thioester), a thioketone, a thiol, a sulphone, a sulphonamide, a fused ring compound containing a heterocyclic sulphur atom, or organic silicon compound such as a silane or siloxane, an amine, a urea, substituted ureas, thiourea, amines and derivatives thereof, and organic phosphorus compounds. The use of organic Lewis Base compounds has been disclosed, inter alia, in British patent specifications 803 198, 809 717, 880 998, 896 509, 920 118, 921 954, 933 236, 940 125, 966 025, 969 074, 971 248, 1 013 363, 1 017 977, 1 049 723, 1 122 010, 1 150 845, 1 208 815, 1 234 657, 1 324 173, 1 359 328, 1 383 207, 1 387 890, 1 423 658, 1 423 659, 1 423 660, 1 495 031, 1 527 736, 1 554 574 and 1 559 194.

The Lewis Base component is preferably a non-hydroxy Lewis Base compound of the type preferred for the production of Component A of the catalyst system. Thus, the Lewis Base component may be an ester of a polycarboxylic acid or an ester of the formula $R^2COOR^3$, where $R^2$ and $R^3$ are as hereinbefore defined. Esters which may be used include dialkyl phthalates and alkyl esters of carboxylic acids containing an aromatic group such as, for example diethyl phthalate, ethyl benzoate, butyl benzoate, methyl p-methylbenzoate, ethyl p-methoxybenzoate and ethyl phenylacetate.

Alternatively, the Lewis Base component may be an organic silicon compound, particularly one containing one or more Si—$OR^4$, Si—$OCOR^4$ or Si—$NR^4$ bonds, where $R^4$ is as hereinbefore defined. Organic silicon compounds which may be used include phenyltriethoxysilane, diphenyldi-isobutoxysilane and iso-butyltriethoxysilane.

In the polymerisation catalyst it is preferred to use at least one mole of the organic metal compound which is Component B for each mole of transition metal which is present in Component A of the catalyst system. In general at least 10 moles of the organic metal compound are used for each mole of transition metal but the proportion of Component B preferably does not exceed 250 moles per mole of transition metal in Component A. Especially preferred proportions of Component B are from 10 up to 60 moles of the organic metal compound for each mole of transition metal.

The preferred catalyst systems also include a Lewis Base compound and the proportion of Lewis Base compound should not exceed the proportion of Component B of the catalyst system and preferably there is used from 0.1 up to 0.5 moles of the Lewis Base compound for each mole of Component B, especially from 0.25 up to 0.4 moles of the Lewis Base compound for each mole of Component B.

The catalyst system of the present invention may be obtained by pre-mixing Components A, B and

optional Component C before introducing the catalyst system into the polymerisation reactor. Alternatively, all the catalyst components may be introduced separately into the polymerisation reactor. A further alternative procedure is to add Component A of the catalyst system separately and to add Components B and C as a mixture. As disclosed in our published British Patent Application No. 2103626, when Component B is an aluminium trialkyl and Component C is an ester of a carboxylic acid containing an aromatic group, if Components B and C are premixed, it is particularly preferred to mix and to store the mixture in the presence of an olefin monomer.

The catalyst systems of the present invention are suitable for the polymerisation or copolymerisation of unsaturated monomers, particularly ethylenically unsaturated hydrocarbon monomers such as the olefin monomers.

As a further aspect of the present invention there is provided a process for the production of a polymer or copolymer of an unsaturated monomer wherein at least one unsaturated hydrocarbon monomer is contacted under polymerisation conditions with a polymerisation catalyst as hereinbefore described.

The monomer which may be used in accordance with the present invention has the formula $CH_2=CHR^5$ wherein $R^5$ is a hydrogen atom or a hydrocarbon radical.

Thus, the monomers which may be polymerised by the process of the present invention include ethylene, propylene, butene-1, pentene-1, hexene-1, 4-methylpentene-1, styrene, 1,3-butadiene or any other monomer having the above formula. The monomer is preferably an olefin monomer, particularly an aliphatic mono-olefin monomer which contains from 2 up to 10 carbon atoms.

The monomers may be homopolymerised or may be copolymerised together. If a copolymerisation is being effected this may be done using a mixture of monomers which has essentially the same composition throughout the polymerisation process. Alternatively, a sequential polymerisation process, such as described in British patents 970 478, 970 479 and 1 014 944, may be used.

The present invention is particularly suitable for the polymerisation of ethylene or propylene, and especially for the polymerisation of propylene in the gas phase.

Thus, as a further aspect of the present invention, there is provided a process for the polymerisation of propylene which comprises contacting gaseous propylene in the substantial absence of any liquid phase with a polymerisation catalyst of the type hereinbefore described.

Using the process of the present invention, it is possible to obtain, as a direct product of polymerisation, a propylene polymer having a titanium content of not more than 7 parts per million by weight, and a chlorine content of less than 150 parts per million by weight. Preferred propylene polymers contain not more than 7% by weight of polymer which is soluble in boiling heptane.

Preferred polymers have a titanium content of not more than 5 parts per million by weight. Propylene polymers obtained by the present invention can have a chlorine content which is not more than 100 parts per million by weight. The polymer may be formed into mouldings which have a flexural modulus of at least 1.40 $GN/m^2$. The flexural modulus is determined from the deformation of a test strip at 1% skin strain after 60 seconds at 23°C and 50% relative humidity measured using a cantilever beam apparatus as described in "Polymer Age", March 1970, pages 57 and 58, using a test strip prepared as described in the detail hereafter in Note (f) to Table Two.

The low proportion of polymer which is soluble in boiling heptane and the high flexural modulus both indicate the high stereoregularity of the propylene polymers of the present invention.

Although the polymerisation process of the present invention is particularly suitable for gas phase polymerisation, it will be appreciated that this does not exclude the possibility of carrying out the polymerisation in the liquid phase where the liquid phase may be an inert hydrocarbon medium or a liquid olefine monomer. If polymerisation is effected in the gas phase, the monomer may be introduced into the polymerisation vessel as a liquid with the conditions of temperature and pressure within the polymerisation vessel being such that a major proportion of the liquid monomer vaporises, thereby giving an evaporative cooling effect, whereby the polymerisation vessel contains a solid phase which is the polymerisation catalyst and the polymer formed thereon and a gaseous monomer phase with only a minor proportion of liquid monomer. Polymerisation in the gas phase may be effected using conditions which are such that the monomer is at a temperature and partial pressure which are close to the dew point temperature and pressure for that monomer, for example, as described in more detail in British patent specification 1 532 445. Polymerisation in the gas phase may be effected using any technique suitable for effecting a gas-solid reaction, such as a fluidised-bed reactor system, a stirred-bed reactor system or a ribbon-blender type of reactor.

It will be apprecated that the catalyst system hereinbefore described is of the type generally known as a Ziegler-Natta type of catalyst system. As is well known, Ziegler-Natta type catalysts are susceptible to the presence of impurities in the polymerisation system. Accordingly, particularly when a high yield of polymer is desired in relation to the transition metal component of the catalyst system, it is desirable to effect the polymerisation using reagents, that is monomer and possibly diluent, which have a high degree of purity, for example, a monomer which contains less than 5 ppm by weight of water and less than 1 ppm by weight of oxygen. Materials having a high degree of purity can be obtained by processes such as those described in British Patent Specifications 1 111 493, 1 226 659 and 1 383 611.

The polymerisation may be effected either in a batch manner or on a continuous basis. The catalyst components may be introduced into the polymerisation vessel separately. It is preferred that the

polymerisation is effected in the presence of a Lewis Base compound and that this Lewis Base compound is pre-mixed with the organic metal compound which is Component B of the catalyst system before the mixture of the two components is introduced into the polymerisation medium.

When carrying out polymerisation on a continuous basis, we have found that particularly useful effects are obtained if the organic metal compound and the Lewis Base compound are pre-mixed just before being introduced into the polymerisation reaction vessel, or if the pre-mixture has been stored in the presence of an olefine monomer.

Thus, as a preferred aspect of the present invention, polymerisation is carried out on a continuous basis using a catalyst system including a Lewis Base compound, the catalyst components are introduced into the polymerisation medium intermittently, and Component B and the Lewis Base compound either a) are mixed together not more than one hour before being introduced into the polymerisation medium, or b) are mixed together and stored in the presence of an olefine monomer until introduced into the polymerisation medium.

Procedure b), is the subject of our published British Patent Application No. 2103626.

The polymerisation can be effected in the presence of a chain transfer agent such as hydrogen or a zinc dialkyl in order to control the molecular weight of the polymer product. The proportion of chain transfer agent used will be dependent on the polymerisation conditions and on the particular monomer or monomer mixture which is being polymerised. Using hydrogen in the polymerisation of propylene, it is preferred to use hydrogen in an amount of from 0.01 up to 5.0%, particularly from 0.05 up to 2.0% molar relative to the monomer. However, when the monomer being polymerised is ethylene, or a mixture in which ethylene is a major polymerisable component (by moles), the amount of hydrogen used is typically much greater, for example, in the homopolymerisation of ethylene the reaction mixture may contain in excess of 50% molar of hydrogen, whereas if ethylene is being copolymerised, the proportion of hydrogen used is typically up to 35% molar of the total reaction mixture.

The polymerisation can be effected under any conditions which have been previously proposed for effecting the polymerisation of olefine monomers. Thus, ethylene polymerisation may be effected at pressures of up to 3000 kg/cm$^2$, and at such pressures the polymerisation temperature may be as high as 300°C. However, it is preferred to carry out the polymerisation at comparatively low pressures and temperatures, particularly for the production of polymers of the higher olefines (including propylene) which have a high stereoregularity. More specifically, the polymerisation is effected at pressures in the range from 1 up to 100 kg/cm$^2$, preferably at a pressure of up to 50 kg/cm$^2$ and especially at pressures in the range from 5 up to 40 kg/cm$^2$.

The polymerisation temperature used will be dependent in part on the particular polymerisation technique being used. Thus, it is possible to use polymerisation temperatures in excess of the melting point of the polymer and such conditions may be used in the polymerisation, or copolymerisation, of ethylene in the presence of a hydrocarbon liquid which can act as a solvent for the polymer formed. However, in general, it is preferred to use temperatures below the melting temperature of the polymer formed and in particular it is preferred to use temperatures of not more than 100°C. The polymerisation temperature is typically in the range from 40°C up to 100°C.

It is generally preferred to effect all stages in the preparation of the magnesium halide composition, and especially in the preparation of the transition metal composition, in an inert atmosphere which is essentially free from oxygen-containing impurities such as water vapour. Very preferably the polymerisation process of the present invention should also be effected in the absence of materials which have a harmful effect on the polymerisation process.

Apparatus suitable for effecting the optional spray-drying step is shown in the accompanying drawings wherein:—

in Figure 1 there is given a cross-sectional elevation of a typical spray-drying apparatus which can be used to perform the optional spray-drying step; and

in Figure 2 there is given a cross-sectional elevation of an alternative apparatus with an atomising nozzle.

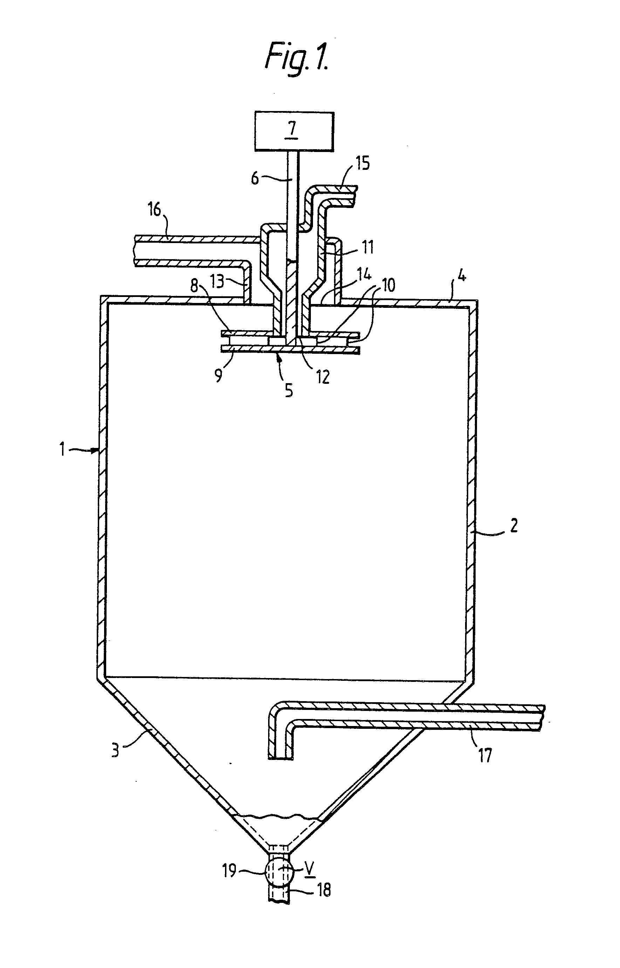

In Figure 1, a gas-tight spray-drying vessel 1 comprises an upper cylindrical section 2 and a lower, generally conical section 3. The upper section 2 is provided with a cover plate 4.

A disc 5 mounted on the end of an output shaft 6 of a high speed gear box/motor assembly 7 is located near the top of the vessel. The disc 5 consists of two plates 8 and 8 between which are secured a series of radial vanes 10. A chamber 11 surrounds the drive shaft 6 and extends to the upper plate 8 of the disc 5. The plate 8 is provided with a central opening indicated at 12.

A plenum chamber 13, which is mounted on the cover plate 4, surrounds the chamber 11. The plenum chamber 13, communicates with the vessel 1 through an annular opening 14 between a central opening in the cover plate 4 and the downward extension of the chamber 11.

A conduit 15 is connected to the chamber 11 and also to a source (not shown) of a suspension containing a solid material. A conduit 16 is connected to the plenum chamber 13 and also to a source (not shown) of a heated inert gas.

Near the bottom of the vessel 1 is located a conduit 17 which passes out of vessel 1 through the side of the conical section 3. A conduit 18, in which is located a valve means 19, is connected to the bottom of the conical section 3 and is also connected to a hopper (not shown) for storing dry solid.

In operation, the disc 5 is rotated at a high speed in the range from 500 up to 25,000 rpm. A suspension containing a solid material and an inert liquid medium, for example a solid titanium composition obtained in accordance with the present invention suspended in toluene, is passed through the conduit 15 and chamber 11 into the space between the plates 8 and 9 of the disc 5. The high speed of rotation of the disc 5, and the vanes 10, cause the suspension to pass to the periphery of the disc 5 from which the suspension is flung off as a spray of droplets.

A hot inert gas is passed through the conduit 16, plenum chamber 13 and the annular opening 14 to flow round the rotating disc 5. The hot inert gas causes evaporation of the liquid medium from the droplets of the suspension.

The inert gas containing the vaporised liquid medium and some entrained spray-dried solid, passes out of the vessel 1 through the conduit 17. The major portion of the spray-dried solid collects at the bottom of the conical section 3 from which it is withdrawn through the conduit 18 by operation of the valve means 19.

The inert gas passing through the conduit 17 may be passed to a cyclone (not shown) to recover entrained solid, then to a condenser (not shown) to recover the liquid vapour and finally to a re-heater (not shown). The reheated inert gas is then recirculated to the conduit 16. The spray-dried solid passing through the conduit 18 is passed to a storage hopper (not shown).

The inert gas passes through the conduit 16 is conveniently nitrogen at a temperature in the range 130 to 150°C.

The apparatus shown in Figure 2 is essentially the same as that shown in Figure 1 with the exception that the disc atomizer is replaced by an atomizer nozzle. In Figure 2, the corresponding parts are indicated by the same reference numbers as in Figure 1. An atomizer nozzle 20 is located within the plenum chamber 13. The atomizer nozzle 20 contains an inner conduit 15A and an outer conduit 21. The conduit 15A is a continuation of conduit 15, which is connected to a source (not shown) of a suspension containing a transition metal composition. Conduit 21 is connected to a source (not shown) of an inert gas. The conduits 15A and 21 are essentially co-axial and are tapered at their lower ends. The nozzle 20 is provided at its lower end with an orifice 22 formed by openings in both of conduits 15A and 21.

In operation, the gas flow through the conduit 21 draws the suspension through the conduits 15 and 15A. The gas and the suspension pass through the orifice 22 and form a spray of droplets. Hot inert gas which passes through conduit 16, plenum chamber 13 and opening 14, flows past the orifice 22 and causes evaporation of the liquid medium from the droplets of the suspension. The spray-dried solid is then recovered in the manner described in respect of the apparatus of Figure 1.

Various aspects of the present invention will now be described with reference to the following Examples which are illustrative of the invention. In the Examples, all operations are effected under an atmosphere of essentially oxygen-and water-free nitrogen unless otherwise indicated. All the glass apparatus was dried in air oven at 120°C for at least one hour and purged with nitrogen before use.

In the propylene polymerisation examples, the propylene used for the polymerisation had been purified further by passing gaseous propylene of commercial purity through a column containing granules of Alcoa F1 alumina at ambient temperature.

Examples 1 to 6 illustrate the preparation of a magnesium chloride composition in accordance with the process of the present invention.

Example 1

A Siebtechnik SM6 Vibromill chamber having a total usable volume of about 1.5 $dm^3$ and containing 180 stainless steel balls of 25 mm diameter was sealed, evacuated to a pressure of $0.3\times10^{-3}$ $kg/cm^2$ and purged with nitrogen, to given an atmosphere of nitrogen in the mill.

261 grammes of essentially anhydrous magnesium chloride (BDH technical grade) and 8 $cm^3$ of thionyl chloride were introduced into the mill chamber. The mill chamber was then placed in the mill assembly, and the mill assembly was vibrated at a frequency of 1500 oscillations per minute and an amplitude of 2 mm. The vibration was continued for six hours without cooling. A solution of 21.4 grammes of phenol in 52 $cm^3$ of thionyl chloride was then introduced into the mill and milling was continued for a further 48 hours without cooling.

After 48 hours, the mill chamber was inverted, and vibration was effected to remove the milled magnesium chloride composition which was collected under nitrogen.

Example 2

The procedure of Example 1 was repeated with the following variations.

238 grammes of magnesium chloride were used and milled alone for two hours. A solution of 10.7 grammes of phenol in 26 $cm^3$ of thionyl chloride was then added and milling was continued for a further 18 hours. Water at ambient temperature was then passed through the jacket of the mill chamber and 57 $cm^3$ of ethyl benzoate were then introduced into the mill chamber. Milling was continued for a further 18 hours and the magnesium chloride composition was then recovered.

Example 3

The procedure was similar to that used in Example 2 with the following variations.

200 grammes of magnesium chloride were used. A solution of 9 grammes of phenol in 22 $cm^3$ of

thionyl chloride was added and milling was continued for six hours. 36 $cm^3$ of titanium tetrachloride were added and milling was continued for a further 18 hours. Water cooling was applied to the jacket of the mill chamber, 48 $cm^3$ of ethyl benzoate were added and milling continued for a further 24 hours before the magnesium chloride composition was collected.

Example 4

A Siebtechnik SM10 Vibromill having a total volume of about 38 $dm^3$ and containing 119 kg of stainless steel balls of 25 mm diameter was sealed and purged with nitrogen, to give an atmosphere of nitrogen in the mill. The mill was vibrated at a frequency of 1500 oscillations per minute and an amplitude of 2 mm. Four kilogrammes of essentially anhydrous magnesium chloride (BDH technical grade) were introduced into the mill whilst the mill was being vibrated. After the addition of the magnesium chloride, the mill was vibrated for about 10 minutes and 100 $cm^3$ of thionyl chloride were added to the vibrating mill. The mill was then vibrated for a further 24 hours whilst maintaining the temperature in the range 50 to 60°C by the intermittent passage of a mixture of water and ethylene glycol at 0°C through the jacket of the mill.

After 24 hours, a solution of 395 grammes of phenol in 940 $cm^3$ of thionyl chloride (the solution having been prepared about 24 hours previously) was added to the vibrating mill over a period of about 30 minutes and vibration of the mill continued for a further 24 hours. One $dm^3$ of ethyl benzoate was then added, milling was continued for a further 24 hours and the magnesium chloride composition was collected.

Example 5

The procedure of Example 4 was repeated with the changes noted hereafter.

A solution of 400 grammes of phenol in one $dm^3$ of thionyl chloride was added over a period of about five minutes and milling was continued for 48 hours before adding the ethyl benzoate and milling was then continued for a further 48 hours before the magnesium chloride composition was collected.

Example 6

A Siebtechnik SM50 Vibromill having a total volume of about 165 $dm^3$ and containing 570 kg of steel balls of 25 mm diameter was purged thoroughly with nitrogen to give a nitrogen atmosphere in the mill. The mill was vibrated using a frequency of 1500 oscillations per minute and an amplitude of 2 mm without cooling. 14 kilogrammes of anhydrous magnesium chloride (as used in Example 1) were introduced into the vibrating mill and after 30 minutes 500 $cm^3$ of thionyl chloride were added over a period of about five minutes.

Milling was continued for 24 hours, initially without cooling but subsequently with intermittent cooling to maintain the temperature in the range 55°C to 65°C, by passing a mixture of water and ethylene glycol at −20°C through the jacket of the mill.

After 24 hours, a solution of 630 grammes of phenol in 1.5 $dm^3$ of thionyl chloride (the solution having been prepared about 24 hours previously) was added to the vibrating mill over a period of about 30 minutes and vibration continued for a further 25 hours whilst maintaining the temperature in the range 55°C to 65°C. 3.36 $dm^3$ of ethyl benzoate were then added over a period of about 30 minutes, milling was continued for a further 24 hours and the magnesium chloride composition was collected.

Examples 7 to 16 illustrate the use of the magnesium chloride compositions of Examples 1 to 6 to prepare titanium compositions according to a further aspect of the present invention.

Example 7

A) Contacting with titanium tetrachloride

270 grammes of the milled product of Example 1 were transferred to a jacketted glass vessel provided with a stirrer and having a capacity of 6 $dm^3$. Three $dm^3$ of titanium tetrachloride were added to the vessel, the stirrer was started and heating applied to the jacket. Heating was continued until a temperature of 100°C was attained, which took one hour. The temperature was maintained at 100°C and stirring was continued, for three hours. At the end of three hours, the stirrer was stopped, but heating was continued and the solid was allowed to settle over a period of two hours. The supernatant liquid was siphoned off from the settled solid, heating was terminated and the contents of the vessel were allowed to cool by standing for 18 hours.

B) Washing

To the residue remaining from stage A) were added 5 $dm^3$ of an aliphatic hydrocarbon diluent consisting essentially of dodecane isomers and having a boiling point in the range 170 to 185°C (hereafter referred to simply as the 'aliphatic hydrocarbon'). The mixture was stirred and heated up to 100°C. Stirring at 100°C was continued for one hour and the stirrer was then stopped. After a further two hours, the supernatant liquid was siphoned off from the settled solid which was allowed to stand overnight without heating.

To the cold residue were added 5 $dm^3$ of the aliphatic hydrocarbon at ambient temperature. The mixture was stirred and heated up to 100°C. The temperature of 100°C was maintained for one hour with stirring. The stirrer was switched off and the solid allowed to settle whilst still maintaining the temperature. After 2.25 hours the supernatant liquid was siphoned off from the settled solid and heating was ceased.

To the hot residue remaining from the previous washing step were added 5 $dm^3$ of the aliphatic hydrocarbon at ambient temperature. The mixture was stirred for 15 minutes without heating, the stirrer was switched off and the solid allowed to settle overnight. The supernatant liquid was then siphoned off from the settle solid.

The cold residue was washed once more using the procedure as described for the previous washing stage with the exception that the solid was allowed to settle for two hours only. The residue, after separating the supernatant liquid, was finally diluted with the aliphatic hydrocarbon at ambient temperature to give a final volume of 1.5 $dm^3$ and the mixture was transferred to a 2 $dm^3$ storage vessel under nitrogen.

Example 8

The procedure of Example 7 was repeated with the changes noted hereafter.

In stage A), 330 grammes of the product of Example 2 were used and this was treated with 3 $dm^3$ of titanium tetrachloride. The treatment with titanium tetrachloride was then repeated using 2 $dm^3$ of titanium tetrachloride.

In stage B), each washing stage was effected using 4.5 $dm^3$ of the aliphatic hydrocarbon. After washing, sufficient of the aliphatic hydrocarbon was added to give a final volume of 1.2 $dm^3$.

A sample (5 $cm^3$) of the mixture obtained was treated with 2N sulphuric acid and the aqueous layer subjected to spectrophotometric analysis. From the analysis, it was deduced that the solid component had a titanium content of 2.9% by weight.

Example 9

The procedure of Example 8 was repeated with the changes noted hereafter.

In stage A), 330 grammes of the product of Example 3 were used. In the second treatment with titanium tetrachloride, 3 $dm^3$ of titanium tetrachloride were used.

In stage B), the first washing stage was effected using 4.5 $dm^3$ of the aliphatic hydrocarbon but in each of the three subsequent washing stages, four $dm^3$ of the aliphatic hydrocarbon were used.

By analysis the solid product was found to contain 3.1% by weight of titanium.

Example 10

The procedure of Example 7 was carried out with the changes noted hereafter.

In stage A), 570 grammes of the product of Example 4 were used and were treated with 5 $dm^3$ of titanium tetrachloride. After removing the supernatant liquid, 4.5 $dm^3$ of the aliphatic hydrocarbon (at ambient temperature), were added and the mixture was allowed to stand overnight without stirring or heating.

In stage B), the mixture including the aliphatic hydrocarbon was used for the first washing step. The mixture was allowed to settle for 30 minutes. After removing the supernatant liquid at the end of the first washing step, and whilst continuing to heat, 4.6 $dm^3$ of the aliphatic hydrocarbon (at ambient temperature) were added to effect the second hot washing step. The mixture was allowed to settle for 30 minutes, the supernatant liquid was siphoned off, heating was stopped and 4.6 $dm^3$ of the aliphatic hydrocarbon were added. The mixture was stirred for 15 minutes and allowed to settle and cool overnight.

The supernatant liquid was siphoned off and 4.9 $dm^3$ of the aliphatic hydrocarbon were used for the final cold wash. The settled solid was diluted to a final volume of 2 $dm^3$.

The foregoing procedure was carried out a total of six times and the products obtained were combined. The combined product will be referred to as Example 10.

Example 11

The procedure of Example 10 was carried out with the changes noted hereafter.

In stage A), 410 grammes of the product of Example 4 were used and, after removing the supernatant liquid, the mixture was allowed to stand and cool overnight. The treatment with titanium tetrachloride was then repeated.

In stage B), 5 $dm^3$ of the aliphatic hydrocarbon were added to the cold residue from the second treatment with titanium tetrachloride. After removing the supernatant liquid, the residue was allowed to stand and cool overnight. The hot washing was then repeated, the mixture allowed to settle for 30 minutes and the supernatant liquid removed. Heating was stopped, 5 $dm^3$ of the aliphatic hydrocarbon were added, the mixture stirred for 15 minutes and allowed to settle overnight.

The supernatant liquid was removed and the cold washing step repeated.

This procedure was carried out a total of five times and the products obtained were combined. The combined product will be referred to as Example 11.

Example 12

The procedure of Example 11 was carried out with the changes noted hereafter.

In stage A), 450 grammes of the product of Example 5 were used.

In stage B), 4.7 $dm^3$ of the aliphatic hydrocarbon were used for each washing step. The two hot

washing steps were effected without allowing the mixture to cool after the first hot washing step. The first cold washing step was effected on the hot residue of the second hot washing step, as in Example 11.

This procedure was carried out a total of five times and the products obtained were combined. The combined product will be referred to as Example 12.

Example 13

The procedure of Example 10 was carried out with the changes noted hereafter.

In stage A), 530 grammes of the product of Example 6 were used and were treated with 4 $dm^3$ of titanium tetrachloride. After removing the supernatant liquid, 4.3 $dm^3$ of the aliphatic hydrocarbon were added and the mixture was allowed to stand overnight.

In stage B), after the first hot washing step, the mixture was allowed to settle for 1.5 hours and the second hot washing step was effected using 4.5 $dm^3$ of the aliphatic hydrocarbon and without permitting cooling to occur. The mixture was allowed to settle for 1.25 hours after the second hot washing step and subsequently 4.5 $dm^3$ of the aliphatic hydrocarbon were added to the hot residue in order to effect the first cold washing step.

The second cold washing step was effected using 4.5 $dm^3$ of the aliphatic hydrocarbon.

This procedure was carried out a total of six times and the products obtained were combined. The combined product will be referred to as Example 13. By analysis the product was found to have a titanium content of 2.9% by weight.

Example 14

The procedure of Example 13 was carried out with the changes noted hereafter.

In stage A), 590 grammes of the product of Example 6 were used. After removing the supernatant liquid, the mixture was allowed to stand and cool overnight.

In stage B), heptane was used as the washing liquid. The heptane was a mixture of isomers of which 30% by weight was n-heptane, the material having a boiling point range of 96 to 99°C. In the first hot washing step, 4.2 $dm^3$ of heptane (at ambient temperature) were added to the cold residue from stage A). The mixture was allowed to cool overnight after removing the supernatant liquid and 4.5 $dm^3$ of heptane were added to the cold residue in order to effect the second hot washing step. 4.5 $dm^3$ of heptane were added to the hot residue from the second hot washing step in order to carry out the first cold washing step.

The second cold washing step was effected using 4.5 $dm^3$ of heptane.

This procedure was carried out a total of three times and the products obtained were combined. The combined product will be referred to as Example 14.

Example 15

The procedure of Example 13 was carried out with the changes noted hereafter.

In stage A), 820 grammes of the product of Example 6 were used and were treated with 5 $dm^3$ of titanium tetrachloride. After removing the supernatant liquid, the mixture was allowed to stand and cool overnight.

In stage B), 4.2 $dm^3$ of the aliphatic hydrocarbon were used for the first hot washing step and the mixture was allowed to stand and cool overnight after removing the supernatant liquid. In the second hot washing step, 4.5 $dm^3$ of the aliphatic hydrocarbon were added to the cold residue from the first hot washing step.

After completing the washing steps, sufficient of the aliphatic hydrocarbon was added to give a final volume of 2.5 $dm^3$.

This procedure was carried out a total of five times and the products obtained were combined. The combined product will be referred to as Example 15.

Example 16

The procedure of Example 15 was carried out with the changes noted hereafter.

In stage A), 600 grammes of the product of Example 6 were used and were treated with 4 $dm^3$ of titanium tetrachloride.

In stage B), 4.1 $dm^3$ of the aliphatic hydrocarbon were used for the first hot washing. The second cold washing step was effected by adding 4.5 $dm^3$ of toluene to the residue from the first cold washing step. Sufficient toluene was added to the residue to give a final volume of 1.8 $dm^3$.

This procedure was carried out twice and the products obtained were combined and treated as described hereafter in stages C) and D).

C) Dispersing titanium-containing composition

To the combined product from stage B) were added 200 $cm^3$ of a 10% weight/volume solution of polystyrene ('Lustrex' HF 66—available from Monsanto Limited) in toluene. This mixture was divided into four approximately equal portions. Each portion was dispersed in the following manner.

A one $dm^3$ three-necked glass flask having a heating/cooling jacket, was fitted with a high shear homogeniser of the Ultra Turrax T45 type (available from Janke and Kunkel KG IKA Werke). Into the flask was introduced one of the portions of the mixture. Water at ambient temperature was passed through the

heating/cooling jacket. The mixture was then subjected simultaneously to vigorous agitation and shearing by operating the homogeniser for three minutes at maximum power (an initial rate of stirring of 10,000 rpm). During the agitation and shearing, the temperature of the mixture rose but did not exceed 50°C.

The dispersion was then transferred to a storage vessel (a 5 $dm^3$ three-necked glass flask fitted with a stirrer), the remaining portions were dispersed in the same manner and added to the storage vessel, the contents of which were being stirred. The combined dispersions were stirred until spray-dried in stage D).

D) Spray drying of dispersion

The dispersion obtained in stage C) was spray dried using a glass laboratory scale spray-drying apparatus similar to that illustrated in Figure 2 of the accompanying drawings. The spray-drying apparatus had a diameter of 15 cm, a length of 0.7 metres and a generally hemispherical bottom section. A conduit from the bottom section was connected directly to a cyclone provided with a catch-pot in which the solid material was collected. A spray nozzle was located at the top of the apparatus and this was a 1/4 JAU Automatic Air Atomizing Nozzle obtained from Spraying Systems Co. of the USA and having a 0.72 mm diameter nozzle.

Spraying was effected under nitrogen by passing a stream of nitrogen, preheated to a temperature of 135 to 140°C into the spray-drying apparatus at a rate of 190 $dm^3$/minute. Nitrogen at a pressure of about 0.5 kg/$cm^2$ gauge was introduced into the spray nozzle. The suspension obtained in stage C) was fed from the 2 $dm^3$ three-necked glass flask to the spray nozzle by the application of an excess nitrogen pressure of 15 to $25\times10^{-3}$ kg/$cm^2$ to this flask.

Examples 17 to 22

Propylene was polymerised continuously in the gas phase as described hereafter. To initiate the polymerisation, the reaction vessel initially contained about 5 kg of polypropylene powder having a flexural modulus of 1.45 GN/$m^2$, and containing 4% by weight of polymer soluble in boiling heptane by Soxhlet extraction for 24 hours.

Polymerisation was effected in a 25 $dm^3$ stainless steel autoclave fitted with a stirrer and having a heating jacket. Initially, the polypropylene powder was placed in the autoclave. The pressure was reduced to 75 millibars and then nitrogen was added to a pressure of one bar, this procedure being carried out a total of three times. The stirrer was rotated at 60 rpm and stirring was continued throughout the following procedure. The autoclave was heated up to 80°C and then evacuated to a pressure of 75 millibars. Liquid propylene was added to the autoclave and vaporised to raise the pressure to 28 kg/$cm^2$ gauge. Hydrogen was added separately in the proportion of 1.5% by weight relative to the propylene.

Tri-isobutyl aluminium and methyl p-methylbenzoate were premixed, in the molar ratio 2.5:1, as solutions in the aliphatic hydrocarbon, and stored for at least 12 hours, both premixing and storage being under propylene at a total pressure of one atmosphere and at ambient temperature, before use of the mixture was commenced. This procedure is the subject of our co-pending British Patent Application No. 8124145 entitled "Olefin Polymerisation Process". The mixture was introduced into the autoclave. A suspension containing a titanium composition obtained by the process of one of Examples 7, 8 or 9 was also introduced into the autoclave. The mixture of the aluminium compound and the ester, and the titanium composition, were added until polymerisation was observed to start. Liquid propylene was being introduced, and gaseous propylene vented off, whilst the catalyst was being added.

Once polymerisation had started, venting of the autoclave was stopped, liquid propylene at 20°C was introduced into the autoclave at a rate to maintain a pressure of 28 kg/$cm^2$ gauge, (about 2 kg/hr for a dwell time of 2.5 hours) and polypropylene, saturated with propylene, was intermittently withdrawn from the autoclave at a desired rate, typically about 2 kg of polymer per hour. The temperature and pressure were maintained at 70°C and 28 kg/$cm^2$ gauge respectively. The mixture of the trialkyl aluminium compound and the ester, and the suspension of the titanium composition, were continuously introduced into the autoclave at the rates set out in Table One hereafter.

The rate of adding the suspension of the titanium composition was adjusted to maintain the rate of polymer production at the desired rate. During the operation of the autoclave, the nature of the titanium composition was changed and operation of the autoclave was continued using various different titanium compositions.

Further details of the polymerisation conditions are set out in Table One. Properties of the polymer products removed at various times during the polymerisations are set out in Table Two.

TABLE ONE

| Example | Ti composition | | Al compound (b) | DT (hours) (c) |
|---|---|---|---|---|
| | Type (a) | Amount (mM/h) | Amount (mM/h) | |
| 17 | 7 | 1.7 | 21 | 1.35 |
| 18 | 8 | 0.38 | 16 | 1.2 |
| 19 | 8 | 0.52 | 24 | 1.0 |
| 20 | 8 | 0.45 | 24 | 0.8 |
| 21 | 9 | 0.41 | 24 | 1.0 |
| 22 | 9 | 0.30 | 24 | 1.4 |

Notes to Table One

(a) Type refers to the Example in which the production of the titanium composition is described.

(b) The aluminium compound was added as a mixture with the ester in the molar ratio, aluminium compound to ester, of 2.5:1.

(c) DT is dwell time and corresponds to:

$$\frac{\text{Average weight of polymer bed}}{\text{Weight of polymer removed per hour}}$$

TABLE TWO

| Example | Time (hours) (d) | Polymer properties | | | | | |
|---|---|---|---|---|---|---|---|
| | | MFI (e) | FM (f) | Ti (h) | Al (h) | Cl (h) | HHS (%) (i) |
| 17 | 7 | 8.0 | 1.03 | 32 | 158 | 431 | ND |
| 18 | 10 | 0.8 | 1.38 | 6 | 115 | 135 | 7.5 |
| 19 | 14 | 1.8 | 1.44 | 7 | 83 | 126 | 8.0 |
| 20 | 15 | 1.2 | 1.38 | 5 | 120 | 140 | 8.1 |
| 21 | 7 | 3.6 | 1.49 | 5 | 115 | 90 | 8.1 |
| 22 | 9 | 2.4 | 1.47 | 5 | 160 | 100 | 7.0 |

Notes to Table Two

(d) The time is the time, in hours, from the commencement of using the specified catalyst system under the specified operating conditions.

(e) MFI is the melt flow index measured by AST Test Method D 1238/70, using a temperature of 230°C and a weight of 2.16 kg.

(f) FM is the flexural modulus expressed in $GN/m^2$. The flexural modulus was measured using a cantilever beam apparatus as described in Polymer Age, March 1970, pages 57 and 58. The deformation of a test strip at 1% skin strain after 60 seconds at 23°C and 50% relative humidity was measured. The test strip which had dimensions of approximately 150×19×1.6 mm, was prepared in the following manner.

23 g of the polymer were mixed with 0.1% by weight of an antioxidant ('Topanol' CA), and the mixture was added to a Brabender Plasticiser, at 190°C, 30 rpm and under a load of 10 kg to convert it to a crepe. The crepe was placed within a template, between aluminium foil and pressed by means of an electric Tangye press at a temperature of 250°C. The pressing was pre-heated for a period of 6 minutes, under just enough pressure to make the polymer flow across the template, that is an applied force of about 1 tonne. After the pre-heat period, the applied force was raised to 15 tonnes in 5 tonne increments, degassing (that is releasing pressure) every 5 tonnes. After 2 minutes at 15 tonnes, the press was cooled by means of air and water for 10 minutes or until room temperature was reached. The plaque obtained was then cut into strips of dimensions 150×19×1.6 mm. Duplicate strips of each polymer were placed into an annealing oven at 130°C and after 2 hours at this temperature the heat was switched off and the oven cooled to ambient temperature at 15°C per hour.

(h) The titanium (Ti), aluminium (Al) and chlorine (Cl) residues from the catalyst are given in parts per million by weight relative to the total polymer product (polymer+catalyst residues) and were measured by X-ray fluorescence on compression moulded discs.

(i) HHS is the proportion by weight of the polymer which is soluble in boiling heptane as determined from the weight loss of a sample of polymer after Soxhlet extraction with heptane for 24 hours.

Examples 23 and 24

The product of Example 13 was used to effect continuous propylene polymerisation in the gas phase using a procedure generally as described for Examples 17 to 22 with the following changes.

Polymerisation was effected in a 0.8 $m^3$ stainless steel autoclave fitted with a stirrer and having a heating jacket. The autoclave was charged with 90 kilogrammes of dry, dechlorinated, polypropylene powder obtained from a previous run using a similar type of catalyst. Heating was applied to the heating jacket and the contents of the reactor were stirred. When a temperature of about 70°C had been attained, nitrogen was introduced into the autoclave to give a pressure of 5 bar absolute and the excess pressure was released to give a pressure of one bar absolute. This procedure was effected a total of five times. The procedure was then repeated, five times, using liquid propylene in place of nitrogen.

Liquid propylene was then added to raise the pressure to the desired operating pressure of 28 bar gauge. Hydrogen was added separately in the proportion of 1.5% by volume relative to the propylene.

200 $cm^3$/hour of a 1.5 M solution of tri-isobutyl aluminium in the aliphatic hydrocarbon and 200 $cm^3$/hour of a 0.6 M solution of methyl-p-methylbenzoate in the aliphatic hydrocarbon were added separately to the autoclave. A suspension containing the product of Example 13 and having a solids content of about 50% by weight, was also introduced into the autoclave.

Once polymerisation had commenced, the temperature and pressure were maintained at 73°C and 28 bar gauge. Once polymerisation had commenced, the propylene removed from the autoclave was passed through a recycle loop containing a cooling system and returned to the autoclave. A further quantity of fresh liquid propylene was added to the autoclave to make up for propylene removed as polymer, or with the polymer. The temperature and pressure within the autoclave were controlled by the rate of addition of the liquid propylene (recycled and fresh).

The product of Example 13 was added at a rate sufficient maintain the polymer production at a desired rate of 45 kg/hour.

Further details of the polymerisation conditions, and some properties of the products obtained, are set out in Table Three.

TABLE THREE

| Example | Time (hours) (d) | Polymer properties | | | |
|---|---|---|---|---|---|
| | | MFI (j) | FM (f) | Ti (h) | HHS (%) (i) |
| 23 | 12 | 30.9 | 1.38 | 8 | 6.8 |
| 24 | 20 | 25.4 | 1.44 | 7 | 6.5 |

Notes to Table Three

(d), (f), (h) and (i) are all as defined in Notes to Table Two.

(j) MFI is the melt flow index measured by ASTM Test Method D 1238/70, Condition N (190°C and 10 kg).

Examples 25 to 32

A continuous copolymerisation was carried out in the gas phase. Polymerisation was effected using two reactors in series, one reactor being as described for Examples 23 and 24 and the other reactor being essentially the same as that described for Examples 23 and 24 but being smaller (0.4 $m^3$).

In the 0.8 $m^3$ reactor propylene was polymerized in the presence of 0.9% by volume of hydrogen, a mixture of polypropylene and unreacted propylene plus hydrogen was transferred to the subsequent 0.4 $m^3$ reactor in which copolymerisation was effected by the addition of ethylene and hydrogen. Ethylene and hydrogen were added to the subsequent reactor in amounts to maintain a gas composition of 25% molar of ethylene, 20% molar of hydrogen and 55% molar of propylene.

To initiate polymerisation, the first reaction vessel initially contained about 90 kg of polypropylene powder, as used in Examples 23 and 24 whilst the subsequent reaction vessel was empty. Reaction conditions (temperature, and pressure) in the first reaction vessel were as used in Examples 23 and 24. In the subsequent reaction vessel, the temperature was maintained at 68°C and the pressure at 0.65 $MN/m^2$ absolute.

Polymerisation was initiated in the first reaction vessel as described for Examples 23 and 24. When polymerisation had started in the first vessel, the solutions of tri-isobutyl aluminium and the methyl p-methylbenzoate were each added to the first vessel at constant rates of 200 $cm^3$/hour. The rate of addition of the titanium composition was varied. The titanium compositions used where the products of Examples 14, 15 and 16. Once polymerisation had started in the first vessel, polymer containing active catalyst and unreacted monomer plus hydrogen were passed into the subsequent vessel, and the addition of ethylene and hydrogen to the subsequent vessel was commenced. Once the polymer level in the subsequent reactor was equivalent to a bed weight of about 85 kg, copolymer was withdrawn from the subsequent reactor at a rate sufficient to keep the level of the polymer bed essentially constant. No additional catalyst was added to the subsequent reactor.

The rate of adding the propylene to the first reaction vessel was adjusted to maintain the desired temperature and pressure. The rate of adding the titanium composition to the first reaction vessel was adjusted to maintain the desired rate of copolymer production (between 40 and 60 kg/hour). During the polymerisation the type of titanium composition used was changed and during the course of the polymerisation the products of Examples 14, 15 and 16 were used in turn.

Further details of the polymerisation conditions are set out in Table Four. Properties of the final copolymer products removed at various times during the polymerisation are set out in Table Five.

TABLE FOUR

| Example | Ti Composition | | DT(hours) (c) | |
|---|---|---|---|---|
| | Type (a) | Amount (mM/h) | homo (k) | co (l) |
| 25 | 14 | 9.5 | 1.4 | 1.3 |
| 26 | 14 | 6.9 | 1.7 | 1.55 |
| 27 | 14 | 7.5 | 2.1 | 1.9 |
| 28 | 14 | 7.5 | 2.3 | 2.1 |
| 29 | 15 | 7.5 | 1.5 | 1.4 |
| 30 | 15 | 7.3 | 1.9 | 1.7 |
| 31 | 16 | 8.0 | 1.7 | 1.55 |
| 32 | 16 | 8.0 | 1.7 | 1.55 |

Notes to Table Four

(a) and (c) are both as defined in Notes to Table One.

(k) homo refers to the first (0.8 $m^3$) reaction vessel.

(l) co refers to the subsequent (0.4 $m^3$) reaction vessel.

TABLE FIVE

| Example | Time (hours) (d) | Copolymer properties | | | | |
|---|---|---|---|---|---|---|
| | | MFI (j) | FM (f) | Ti (h) | LTBP (°C) (m) | Wt % Eth. |
| 25 | 12 | 17.5 | 1.04 | 7 | −20 | 4.3 |
| 26 | 28 | 19.6 | 1.15 | 6 | −17 | 5.3 |
| 27 | 44 | 20.9 | 1.17 | 8 | −19 | 5.2 |
| 28 | 60 | 10.7 | 1.30 | 9 | −9 | 2.9 |
| 29 | 12 | 20.8 | 1.05 | 6 | −17 | 6.1 |
| 30 | 20 | 18.2 | 1.11 | 7 | −20 | 5.3 |
| 31 | 12 | 12.1 | ND | 7 | −18 | 6.6 |
| 32 | 16 | 12.5 | 1.09 | 7 | −18 | 6.6 |

Notes to Table five

(d), (f) and (h) are all as defined in Notes to Table One.

(j) is as defined in Notes to Table Three.

(m) The low temperature brittle point (LTBP) was determined using the technique of ASTM Test Method D 746 modified by using specimens and specimen holder as in ASTM Bulletin No. 231, July 1958. The specimens are cut from a plaque prepared in the same manner as the plaque from which were cut the test strips used in the flexural modulus test (Note (f) to Table Two).

**Claims**

1. A process for the production of a magnesium halide composition wherein a magnesium halide is contacted with a) at least one compound of the formula

$$AO_aX_{(b-2a)}$$

and b) at least one compound of the formula $R^1OH$, or with the reaction product of a) and b) wherein the number of moles of b) is less than the number of moles of a)

A is a non-metallic element, other than oxygen, of Group IV to VI of the Periodic Table;
$R^1$ is a hydrocarbon radical;
X is a halogen atom;
a has a value of 1 or 2 and 2a has a value which is less than the valency of A; and
b is equal to the valency of A.

2. A process as claimed in claim 1 wherein the compound

$$AO_aX_{(b-2a)}$$

is thionyl chloride.

3. A process as claimed in claim 1 or claim 2 wherein from 1% up to 50% by weight of the compound

$$AO_aX_{(b-2a)}$$

is used relative to the magnesium halide.

4. A process as claimed in any one of claims 1 to 3 wherein in the compound $R^1OH$, the group $R^1$ is, or contains, an aromatic group and the —OH group is directly linked to an aromatic ring.

5. A process as claimed in any one of claims 1 to 4 wherein from 0.2% up to 50% by weight of the compound $R^1OH$ is used relative to the magnesium halide.

6. A process as claimed in any one of claims 1 to 5 wherein the compound

$$AO_aX_{(b-2a)}$$

and the compound

$$R^1OH$$

are reacted together and the reaction product is contacted with the magnesium halide in the presence of the compound

$$AO_aX_{(b-2a)}.$$

7. A process as claimed in any one of claims 1 to 6 wherein the magnesium halide is also contacted with a Lewis Base compound which is other than a compound of the formula $R^1OH$.

8. A process as claimed in any one of claims 1 to 7 wherein the magnesium halide is ground together with the compounds

$$AO_aX_{(b-2a)} \text{ and } R^1OH,$$

or the reaction product thereof, and any Lewis Base compound which is used.

9. A process as claimed in any one of claims 1 to 8 wherein a part, or all, of the contacting is effected without grinding by suspending the magnesium halide in a liquid medium which contains at least one of the compounds

$$AO_aX_{(b-2a)} \text{ and } R^1OH$$

or the reaction product thereof, and any Lewis Base compound which is used.

10. A process for the production of a transition metal composition which comprises contacting a compound of a transition metal of Groups IVA to VIA of the Periodic Table with a magnesium halide composition obtained by the process of any one of claims 1 to 9.

11. A process as claimed in any one of claims 1 to 10 which includes a spray-drying stage in which a solid material is suspended in an inert liquid medium, the suspension formed is spray-dried and a spray-dried solid material is collected wherein the solid material is a magnesium halide, a magnesium halide composition, a transition metal composition or the product obtained in an intermediate stage.

12. A process as claimed in claim 11 wherein a magnesium halide material is spray-dried and the spray-dried product is contacted, without grinding, first with the compounds

$$AO_aX_{(b-2a)} \text{ and } R^1OH,$$

and optionally a Lewis Base compound other than the compound $R^1OH$, and thereafter with a liquid phase containing titanium tetrachloride.

13. A polymerisation catalyst which is the product obtained by mixing together

1) a transition metal composition obtained by the process of any one of claims 10 to 12; and
2) an organic compound of aluminium or of a metal of Group IIA of the Periodic Table or a complex of an organic compound of a metal of Group IA or Group IIA of the Periodic Table together with an organic aluminium compound

14. A process for the production of a polymer or copolymer of an unsaturated monomer wherein at least one ethylenically unsaturated hydrocarbon monomer is contacted, under polymerisation conditions, with a polymerisation catalyst as claimed in claim 13.

**Patentansprüche**

1. Verfahren zur Herstellung einer Magnesiumhalogenid-Zusammensetzung, bei dem ein Magnesiumhalogenid mit a) mindestens einer Verbindung der Formel

$$AO_aX_{(b-2a)}$$

und b) mindestens einer Verbindung der Formel $R^1OH$ oder mit dem Reaktionsprodukt von a) und b) in Berührung gebracht wird, wobei

die Molzahl von b) kleiner als die Molzahl von a) ist,

A ein von Sauerstoff verschiedenes, nichtmetallisches Element der Gruppe IV bis VI des Periodensystems ist,

$R^1$ ein Kohlenwasserstoffrest ist,

X ein Halogenatom ist,

a den Wert 1 oder 2 hat und 2a einen Wert hat, der kleiner als die Wertigkeit von A ist und

b gleich der Wertigkeit von A ist.

2. Verfahren nach Anspruch 1, bei dem die Verbindung

$$AO_aX_{(b-2a)}$$

Thionylchlorid ist.

3. Verfahren nach Anspruch 1 oder Anspruch 2, bei dem 1 bis 50 Masse% der Verbindung

$$AO_aX_{(b-2a)},$$

bezogen auf das Magnesiumhalogenid, verwendet werden.

4. Verfahren nach einem der Ansprüche 1 bis 3, bei dem in der Verbindung $R^1OH$ die Gruppe $R^1$ eine aromatische Gruppe ist oder eine aromatische Gruppe enthält und die OH-Gruppe direkt mit einem aromatischen Ring verbunden ist.

5. Verfahren nach einem der Ansprüch 1 bis 4, bei dem 0,2 bis 50 Masse% der Verbindung $R^1OH$, bezogen auf das Magnesiumhalogenid, verwendet werden.

6. Verfahren nach einem der Ansprüche 1 bis 5, bei dem die Verbindung

$$AO_aX_{(b-2a)}$$

und die Verbindung

$$R^1OH$$

miteinander umgesetzt werden und das Reaktionsprodukt in Gegenwart der Verbindung

$$AO_aX_{(b-2a)}$$

mit dem Magnesiumhalogenid in Berührung gebracht wird.

7. Verfahren nach einem der Ansprüche 1 bis 6, bei dem das Magnesiumhalogenid auch mit einer Lewisbasenverbindung, die von einer Verbindung der Formel $R^1OH$ verschieden ist, in Berührung gebracht wird.

8. Verfahren nach einem der Ansprüche 1 bis 7, bei dem das Magnesiumhalogenid zusammen mit den Verbindungen

$$AO_aX_{(b-2a)} \text{ und } R^1OH$$

oder ihrem Reaktionsprodukt und jeder Lewisbasenverbindung, die verwendet wird, gemahlen wird.

9. Verfahren nach einem der Ansprüche 1 bis 8, bei dem ein Teil des Inberührungsbringens oder das gesamte Inberührungbringen ohne Mahlen durch Suspendieren des Magnesiumhalogenids in einem flüssigen Medium, das mindestens eine der Verbindungen

$AO_aX_{(b-2a)}$ und $R^1OH$

oder ihr Rekationsproduckt und jede Lewisbasenverbindung, die verwendet wird, enthält, durchgeführt wird.

10. Verfahren zur Herstellung einer Übergangsmetall-Zusammensetzung, bei dem eine Verbindung eines Übergangsmetalls der Gruppen IVA bis VIA des Periodensystems mit einer Magnesiumhalogenid-Zusammensetzung, die durch das Verfahren nach einem der Ansprüche 1 bis 9 erhalten wird, in Berührung gebracht wird.

11. Verfahren nach einem der Ansprüche 1 bis 10, das eine Sprühtrocknungsstufe enthält, in der eine Festsubstanz in einem inerten, flüssigen Medium suspendiert wird, die gebildete Suspension sprühgetrocknet wird und eine sprühgetrocknete Festsubstanz gesammelt wird, wobei die Festsubstanz ein Magnesiumhalogenid, eine Magnesiumhalogenid-Zusammensetzung, eine Übergangsmetall-Zusammensetzung oder das in einer Zwischenstufe erhaltene Produkt ist.

12. Verfahren nach Anspruch 11, bei dem eine Magnesiumhalogenidsubstanz sprühgetrocknet wird und das sprühgetrocknete Produkt ohne Mahlen zunächst mit den Verbindungen

$AO_aX_{(b-2a)}$ und $R^1OH$

und gegebenenfalls mit einer von der Verbindung $R^1OH$ verschiedenen Lewisbasenverbindung und danach mit einer flüssigen Phase, die Titantetrachlorid enthält, in Berührung gebracht wird.

13. Polymerisationskatalysator, der das Produkt ist, das erhalten wird, indem

1) eine Übergangsmetall-Zusammensetzung, die durch das Verfahren nach einem der Ansprüche 10 bis 12 erhalten wird und
2) eine organische Verbindung des Aluminiums oder eines Metalls der Gruppe IIA des Periodensystems oder ein Komplex einer organischen Verbindung eines Metalls der Gruppe IA oder der Gruppe IIA des Periodensystems mit einer organischen Aluminiumverbindung

zusammengemischt werden.

14. Verfahren zur Herstellung eines Polymers oder Copolymers eines ungesättigten Monomers, bei dem mindestens ein ethylenisch ungesättigtes Kohlenwasserstoff-Monomer unter Polymerisationsbedingungen mit einem Polymerisationskatalysator nach Anspruch 13 in Berührung gebracht wird.

**Revendications**

1. Procédé de production d'une composition d'halogénure de magnésuim, caractérisé en ce que l'on met en contact un halogénure de magnésium avec;

(a) au moins un composé de formule

$$AO_aX_{(b-2a)}$$

et (b) au moins un composé de formule $R^1OH$, ou avec le produit de réaction de (a) et (b), où le nombre de moles de (b) est inférieur au nombre de moles de (a),

A est un élément non-métallique, autre que l'oxygène, des groupes IV et VI du Tableau Périodique,

$R^1$ est un radical hydrocarboné;

X est un atome d'halogène;

*a* a une valeur de 1 ou 2 et 2*a* a une valeur qui est inférieure à la valence de A; et

*b* est égal à la valence de A.

2. Procédé suivant la revendication 1, caractérisé en ce que le composé

$$AO_aX_{(b-2a)}$$

est du chlorure de thionyle.

3. Procédé suivant la revendication 1 ou la revendication 2, caractérisé en ce que l'on utilise 1 à 50 % en poids du composé

$$AO_aX_{(b-2a)}$$

par rapport à l'halogénure de magnésium.

4. Procédé suivant l'une quelconque des revendications 1 à 3, caractérisé en ce que dans le composé $R^1OH$, le groupe $R^1$ est ou contient un groupe aromatique et le groupe —OH est directement lié au noyau aromatique.

5. Procédé suivant l'une quelconque des revendications 1 à 4, caractérisé en ce qu'on utilise 0,2 à 50% en poids du composé $R^1OH$ par rapport à l'halogénure de magnésium.

6. Procédé suivant l'une quelconque des revendications 1 à 5, caractérisé en ce que l'on fait réagir ensemble le composé

$$AO_aX_{(b-2a)}$$

et le composé

$$R^1OH$$

et que l'on met le produit de réaction en contact avec l'halogénure de magnésium en présence du composé

$$AO_aX_{(b-2a)}$$

7. Procédé suivant l'une quelconque des revendications 1 à 6, caractérisé en ce qu'on met également l'halogénure de magnésium en contact avec une base de Lewis, qui est différente d'un composé de formule $R^1OH$.

8. Procédé suivant l'une quelconque des revendications 1 à 7, caractérisé en ce que l'halogénure de magnésium est broyé avec les composés

$$AO_aX_{(b-2a)} \text{ et } R^1OH$$

ou le produit de réaction de ceux-ci, et une quelconque base de Lewis qui est mise en oeuvre.

9. Procédé suivant l'une quelconque des revendications 1 à 8, caractérisé en ce qu'une partie ou la totalité du contact est effectué sans broyage, par mise en suspension de l'halogénure de magnésium dans un milieu liquide qui contient au moins l'un des composés

$$AO_aX_{(b-2a)} \text{ et } R^1OH$$

ou leur produit de réaction, et une quelconque base de Lewis mise en oeuvre.

10. Procédé pour la production d'une composition d'un métal de transition qui comprend la mise en contact d'un composé d'un métal de transition des groupes IV A et VI A du Tableau Périodique, avec une composition d'halogénure de magnésium obtenue par le procédé de l'une quelconque des revendications 1 à 9.

11. Procédé suivant l'une quelconque des revendications 1 à 10, qui comprend une étape de séchage par atomisation, dans laquelle une matière solide est mise en suspension dans un milieu liquide inerte, la suspension formée est séchée par atomisation et une matière solide séchée par atomisation est collectée, la matière solide étant un halogénure de magnésium, une composition d'halogénure de magnésium, une composition de métal de transition ou le produit obtenu dans une étape intermédiaire.

12. Procédé suivant la revendication 11, caractérisé en ce qu'une matière comprenant un halogénure de magnésium est séchée par atomisation et que le produit séché par atomisation est mis en contact, sans broyage, d'abord avec les composés

$$AO_aX_{(b-2a)} \text{ et } R^1OH$$

et éventuellement une base de Lewis autre que le composé $R^1OH$, et ensuite avec une phase liquide contenant du tétrachlorure de titane.

13. Catalyseur de polymérisation qui est le produit obtenu par mélange:

1) d'une composition de métal de transition obtenue par le procédé de l'une quelconque des revendications 10 à 12; et
2) d'un composé organique d'aluminium ou d'un métal du groupe II A du Tableau Périodique ou d'un complexe d'un composé organique d'un métal du groupe I A ou du groupe II A du Tableau Périodique avec un composé organoaluminique.

14. Procédé pour la production d'un polymère ou d'un copolymère d'une monomère insaturé, caractérisé en ce qu'au moins un monomère hydrocarboné insaturé éthylèniquement est mis en contact, dans des conditions de polymérisation, avec un catalyseur de polymérisation suivant la revendication 13.

*Fig. 2.*

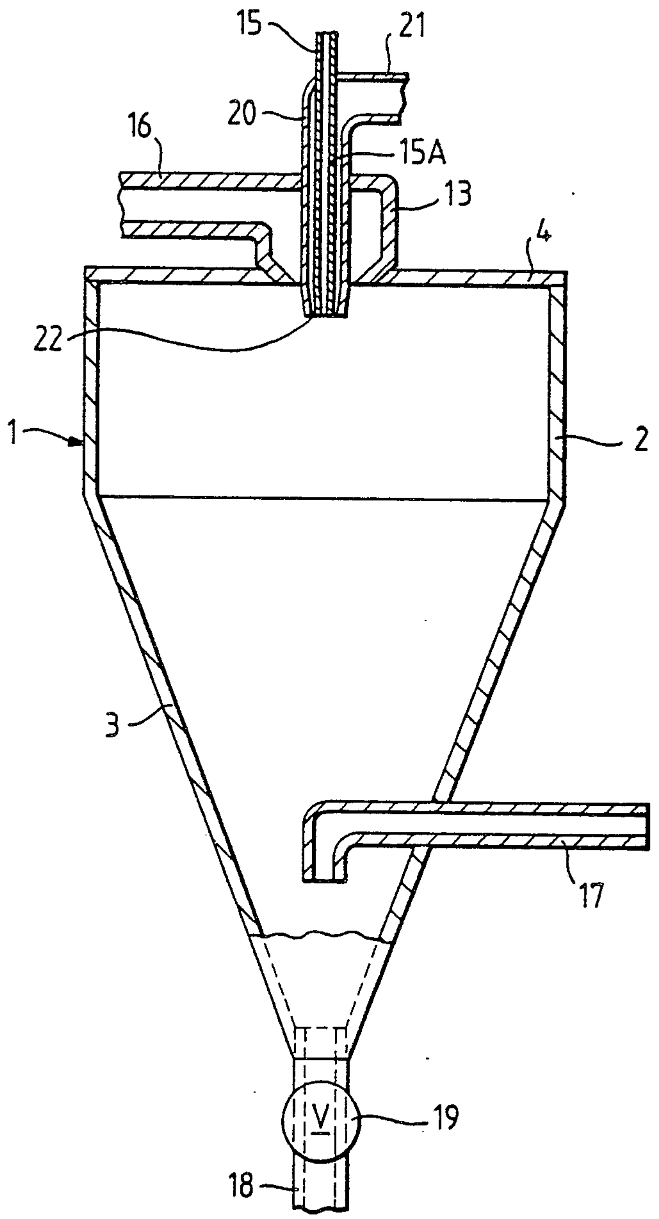

Fig. 1.